# EUROPÄISCHE PATENTSCHRIFT

(11) **EP 0 749 803 B1**
(45) Veröffentlichungstag und Bekanntmachung des Hinweises auf die Patenterteilung: **26.11.1997**
(21) Anmeldenummer: 96107741.9
(22) Anmeldetag: 15.05.1996
(51) Int. Cl.: B23Q 5/20

(54) **Festhaltevorrichtung für die Werkstückspindel einer Drehmaschine**
Fixing means for the workpiece spindle of a lathe
Dispositif de verrouillage de la broche pour les pièces d'un tour

(30) Priorität: 22.06.1995 DE 19522711
(43) Veröffentlichungstag der Anmeldung: 27.12.1996
(73) Patentinhaber: GILDEMEISTER AG, D-33689 Bielefeld (DE)
(72) Erfinder: Rehage, Gerhard, 33343 Gütersloh (DE)

(56) Entgegenhaltungen:
- EP-A- 0 146 783
- EP-A- 0 209 943
- EP-A- 0 358 531
- DE-A- 2 102 878

## Beschreibung

Die Erfindung betrifft eine Festhaltevorrichtung für die Werkstückspindel einer Drehmaschine mit einer mit der in einem Spindelgehäuse gelagerten Werkstückspindel drehfest verbundenen Bremsscheibe und mit einer Klemmeinrichtung zum Festhalten der Bremsscheibe, die am Spindelgehäuse gelagert ist.

Eine derartige Festhaltevorrichtung ist in DE-OS 21 02 878 und in EP 03 58 531 B1 beschrieben und dargestellt. Die auf der Werkstückspindel befestigte Bremsscheibe wird von mindestens zwei einander gegenüberliegenden Kolben festgehalten, die in einem U-förmigen Gehäuse verschieblich gelagert sind. Das Kolbengehäuse kann am Spindelkasten befestigt sein. Zur Bearbeitung eines im Spannfutter der Werkstückspindel gehaltenen Werkstücks mit rotierend angetriebenen Werkzeugen werden auf das Werkstück und damit auf die Werkstückspindel tangential wirkende, wechselnde Kräfte ausgeübt. Da die Kolben wegen ihrer Verschiebung mit Spiel im Kolbengehäuse gelagert sein müssen, führen derartige Bearbeitungskräfte zu einer Drehschwingung der Werkstückspindel und damit zu einer ungenauen Bearbeitung.

Der Erfindung liegt die Aufgabe zugrunde, die Festhaltevorrichtung so auszuführen, daß eine in Umfangsrichtung spielfreie Positionierung der Werkstückspindel erreicht wird, wobei die Werkstückspindel eine beliebige Drehwinkelposition einnehmen darf.

Die Aufgabe wird durch die Merkmale des ersten Anspruchs gelöst.

Durch die reibschlüssige Verbindung zwischen Spindelgehäuse und drehfest auf der Werkstückspindel befestigter Bremsscheibe existiert an keiner Stelle des Kraftflusses Spiel, das Schwingungen zulassen würde. Obwohl die Bremsscheibe in Spindelachsichtung elastisch verformbar sein muß, ist ihre Umfangssteifigkeit sehr groß.

Die Wirkung kann mit einfachsten Mitteln erreicht werden, wenn die Bremsscheibe unmittelbar an das Spindelgehäuse durch einen einseitig auf die Bremsscheibe wirkenden Kolben angepreßt wird.

Eine bevorzugte Ausführungsform der Erfindung wird an Hand der nachstehenden Zeichnungen näher beschrieben. Es zeigen:
Fig. 1 ein Spindelgehäuse mit werkstückspindelintegriertem Antriebsmotor im Schnitt;
Fig. 2 eine Seitenansicht des Spindelgehäuses;
Fig. 3 einen vergrößerten Ausschnitt des in Fig. 1 linken Spindelgehäuseendes.

Auf einer Konsole 1 ist das Spindelgehäuse 2 befestigt, das im wesentlichen aus dem vorderen Spindellagerflansch 3 und dem hinteren Spindellagerflansch 4 besteht, zwischen denen der Stator 5 des Spindelantriebs eingespannt ist. Der Rotor 6 des Antriebsmotors ist auf der Werkstückspindel 7 unmittelbar befestigt, die mittels Schrägkugellager 8 im vorderen Spindellagerflansch 3 und mittels Rollenlager 9 im hinteren Spindlelagerflansch 4 drehbar gelagert ist. Auf dem hinteren Ende der Werkstückspindel 7 ist ein Klemmring 10 aufgesetzt, an dem die Bremsscheibe 11 befestigt ist, während die Klemmeinrichtung 12 am hinteren Spindellagerflansch 4 des Spindelgehäuses 2 angebracht ist.

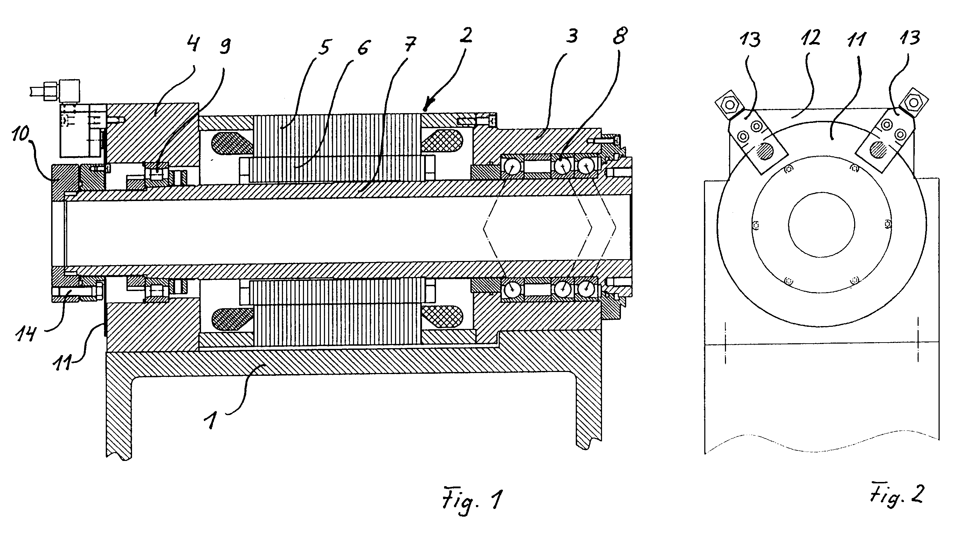

Wie Fig. 2 zeigt, besteht die Klemmeinrichtung 12 aus zwei Klemmeinheiten 13, die auf die Bremsscheibe 11 einwirken. Wenn eine gerade Zahl von Klemmeinheiten 13 auf gegenüberliegenden Seiten der Drehspindel 7 angeordnet werden, arbeitet die Festhalteeinrichtung guerkraftfrei.

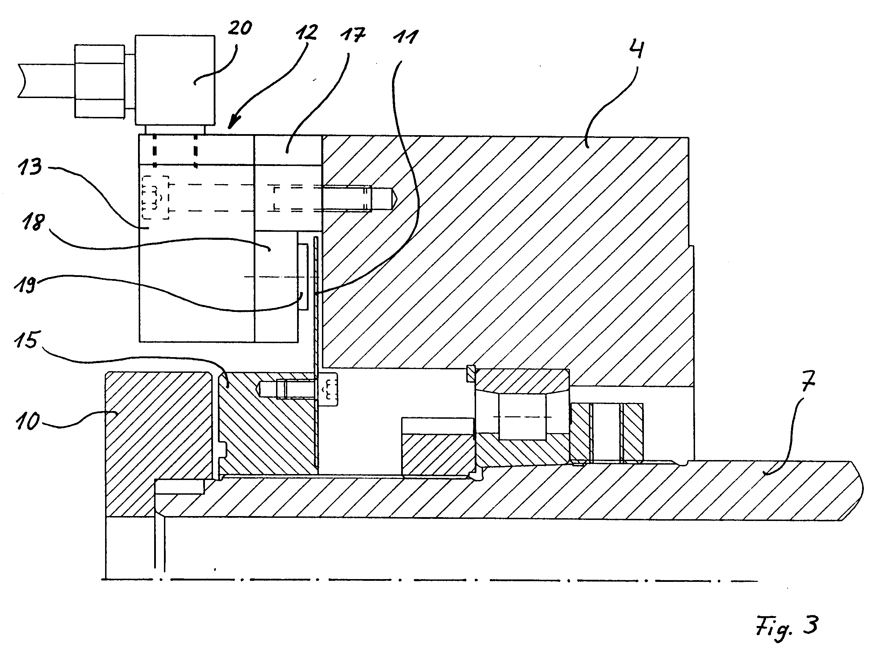

In Fig. 3 ist die Klemmeinrichtung 12 vergrößert dargestellt. Auf dem hinteren Ende der Werkstückspindel 7 ist ein Klemmring 10 undrehbar befestigt, an dem mittels Schrauben 14 ein Bremsscheibenträger 15 angeschraubt ist. Der Bremsscheibenträger 15 ist mit der Bremsscheibe 11 fest verbunden und erlaubt die Einstellung des Abstandes der letzteren zum hinteren Spindellagerflansch 4 des Spindelgehäuses 2. Am Spindellagerflansch 4 ist über ein Distanzstück 17 die Klemmeinheit 13 angeschraubt, die den Druckzylinder 18 trägt, in dem der Kolben 19 unter der Wirkung eines Druckmediums verschoben wird. Das Druckmedium wird über eine Zuführung 20 und nicht dargestellte Leitungen dem Druckzylinder zugeführt.

Unter der Wirkung des Kolbens 19 wird die Bremsscheibe 11 elastisch verformt und legt sich an die Wand des Spindellagerflansches 4 an. Über diesen Reibschluß wird die Werkstückspindel 7 spielfrei festgehalten.

## Patentansprüche

1. Festhaltevorrichtung für die Werkstückspindel (7) einer Drebmaschine mit einer mit der in einem Spindelgehäuse (2) drehbar gelagerten Werkstückspindel (7) drehfest verbundenen Bremsscheibe (11) und mit einer Klemmeinrichtung (12) zum Festhalten der Bremsscheibe (11), die am Spindelgehäuse (2) befestigt ist, dadurch gekennzeichnet, daß die Bremsscheibe (11) aus einer in Umfangsrichtung steifen, in Spindelachsrichtung biegeelastischen Scheibe besteht, die durch die Klemmeinrichtung an eine plane Fläche des Spindelgehäuses (2) anpreßbar ist.

2. Festhaltevorrichtung nach Anspruch 1 dadurch gekennzeichnet, daß die Klemmeinrichtung (12) aus mindestens einem einseitig auf die Bremsscheibe (11) wirkenden, verschieblichen Kolben besteht.

3. Festhaltevorrichtung nach Anspruch 1 dadurch gekennzeichnet, daß die Bremsscheibe (11) unmittelbar benachbart zur Rückwand des Spindelgehäuses (2) angeordnet ist.

4. Festhaltevorrichtung nach Anspruch 1 dadurch gekennzeichnet, daß die Bremsscheibe (11) an einem Klemmring (10) befestigt ist, der undrehbar mit der Werkstückspindel (7) verbunden ist.

5. Festhaltevorrichtung nach Anspruch 1 dadurch gekennzeichnet, daß eine plane Reibfläche am Spindelgehäuse (2) selbst oder einem mit dem Spindelgehäuse (2) fest verbundenen Bauteil vorgesehen ist.

## Claims

1. A locking device for the workpiece spindle (7) of a lathe having a brake disc (11) non-rotatably connected to the workpiece spindle (7) rotatably mounted in a spindle housing (2), and a clamping means (12) for locking the brake disc (11), which is fixed to the spindle housing (2), characterised in that the brake disc (11) comprises, a disc which is stiff in the peripheral direction and flexurally elastic in the axial direction of the spindle and can be pressed by the clamping means against a flat surface of the spindle housing (2).

2. A locking device according to claim 1 characteried in that the clamping means (12) comprises at least one displaceable piston which acts at one side on the brake disc (11).

3. A locking device according to claim 1 characterised in that the brake disc (11) is arranged immediately adjacent to the rear wall of the spindle housing (2).

4. A locking device according to claim 1 characterised in that the brake disc (11) is fixed to a clamping ring (10) which is non-rotatably connected to the workpiece spindle (7).

5. A locking device according to claim 1 characterised in that there is provided a flat friction surface on the spindle housing (2) itself or a component fixedly connected to the spindle housing (2).

## Revendications

1. Dispositif de maintien pour la broche porte-pièce (7) d'une machine rotative avec un disque de frein (11) lié solidairement en rotation avec la broche porte-pièce (7), montée tournante dans un carter de broche (2) et avec un dispositif de serrage (12) pour le maintien du disque de frein (11), qui est fixé sur le carter de broche (2), caractérisé en ce que le disque de frein (11) est constitué d'un disque rigide dans la direction périphérique, élastique en flexion dans la direction de l'axe de la broche, qui peut être pressé, par le dispositif de serrage, contre une surface plane du carter de broche (2).

2. Dispositif de maintien selon la revendication 1, caractérisé en ce que le dispositif de serrage (12) est constitué d'au moins un piston coulissant, agissant d'un côté sur le disque de frein (11).

3. Dispositif de maintien selon la revendication 1, caractérisé en ce que le disque de frein (11) est placé directement au voisinage de la paroi arrière du carter de broche (2).

4. Dispositif de maintien selon la revendication 1, caractérisé en ce que le disque de frein (11) est fixé sur un anneau de serrage (10), qui est relié, de manière à ne pouvoir tourner, avec la broche porte-pièce (7).

5. Dispositif de maintien selon la revendication 1, caractérisé en ce qu'il est prévu une surface de friction plane sur le carter de broche (2) lui-même ou un composant fixement relié au carter de broche (2).
